# EUROPÄISCHE PATENTANMELDUNG

(11) **EP 3 540 918 A1**
(43) Veröffentlichungstag der Anmeldung: **18.09.2019**
(21) Anmeldenummer: 18161618.6
(22) Anmeldetag: 13.03.2018
(51) Int. Cl.: H02K 5/173, B60K 1/00, H02K 7/00, H02K 16/00, H02K 1/32, H02K 9/19, H02K 7/10, H02K 11/21, H02K 5/20

(54) **ELEKTROFAHRZEUG**

(71) Anmelder: FLET GmbH, 38118 Braunschweig (DE)
(72) Erfinder: Meyer, Wolfgang, 38116 Braunschweig (DE); Grote, Jochen, 38104 Braunschweig (DE)
(74) Vertreter: Gramm, Lins & Partner Patent- und Rechtsanwälte PartGmbB

(57) **Zusammenfassung**

Die Erfindung betrifft ein Elektrofahrzeug (10) mit einem Elektromotor (18), der (a) ein erstes Elektromotor-Modul (38.1), das einen ersten Rotor (42.1), der eine erste Rotorwelle (40.1) besitzt, aufweist und dessen Rotorwelle (40.1) eine erste Wellen-Koppelstruktur (46a) hat, und (b) zumindest ein zweites Elektromotor-Modul (38.2), das einen zweiten Rotor (42.2), der eine zweite Rotorwelle (40.2) besitzt, aufweist und dessen zweite Rotorwelle (40.2) eine zweite Wellen-Koppelstruktur (46b) hat, und (c) eine Drehlagerung (68), mittels der die erste Rotorwelle (40.1) gelagert ist, umfasst, (d) wobei die erste Rotorwelle (40.1) und die zweite Rotorwelle (40.2) mittels der Wellen-Koppelstrukturen (46) formschlüssig miteinander gekoppelt sind. Erfindungsgemäß ist vorgesehen, dass die Wellen-Koppelstrukturen (46) zumindest teilweise von der Drehlagerung (68) umgeben sind.

## Beschreibung

Die Erfindung betrifft ein Elektrofahrzeug mit einem Elektromotor, der (a) ein erstes Elektromotor-Modul, das einen ersten Rotor, der eine erste Rotorwelle besitzt, aufweist und dessen Rotorwelle eine erste Wellen-Koppelstruktur hat, und (b) zumindest ein zweites Elektromotor-Modul, das einen zweiten Rotor, der eine zweite Rotorwelle besitzt, aufweist und dessen zweite Rotorwelle eine zweite Wellen-Koppelstruktur hat, und (c) eine Drehlagerung, mittels der die erste Rotorwelle gelagert ist, umfasst, wobei (d) die erste Rotorwelle und die zweite Rotorwelle mittels der Koppelstrukturen formschlüssig miteinander gekoppelt sind. Die Erfindung betrifft zudem einen Elektromotor mit den genannten Eigenschaften, der insbesondere für ein Elektrofahrzeug ausgebildet ist, das ist aber nicht notwendig.

Die Erfindung betrifft zudem ein Elektrofahrzeug mit einem Elektromotor, der (a) einen Stator, der Stator-Elektromagneten aufweist, und (b) einen Rotor, der Magnete, insbesondere Permanentmagnete, hat. Allerdings kann der Rotor auch Elektromagnete aufweisen, insbesondere kann der Elektromotor ein Asynchronmotor sein.

Elektrofahrzeuge, insbesondere Personenkraftwagen, werden zunehmend zur Personen- und Lastenbeförderung eingesetzt. Es hat sich herausgestellt, dass die Massenfertigung von Elektrofahrzeugen aufwändig ist, wenn in einem Fahrzeugmodell unterschiedliche Motorleistungen angeboten werden sollen.

Der Erfindung liegt die Aufgabe zugrunde, Nachteile im Stand der Technik zu vermindern.

Die Erfindung löst das Problem durch ein gattungsgemäßes Elektrofahrzeug oder einen gattungsgemäßen Elektromotor, bei dem Koppelstrukturen zumindest teilweise von der Drehlagerung umgeben sind.

Vorteilhaft an der Erfindung ist, dass der Elektromotor auf diese Weise sehr kompakt gebaut werden kann. So ist es gemäß einer bevorzugten Ausführungsform möglich, dass die Verbindung mittels der Koppelstrukturen am Gehäuse und an den Rotorwellen zu keiner zusätzlichen axialen Verlängerung der Baulänge führen.

Vorteilhaft ist zudem, dass eine derartige Koppelstruktur in der Regel vergleichsweise einfach zu fertigen ist. Es ist daher möglich, den Elektromotor aus zwei, drei, vier oder mehr Elektromotor-Modulen aufzubauen. Wie bei jeder modularen Bauweise führt die Modularisierung der einzelnen Komponenten in aller Regel zu einer effizienteren Fertigung.

Gemäß einer bevorzugten Ausführungsform besitzt die Drehlagerung ein erstes Drehlager, das einen ersten Satz an Wälzkörpern, die ringförmig angeordnet sind, aufweist, und ein zweites Drehlager, das einen zweiten Satz an Wälzkörpern, die ringförmig und versetzt zum ersten Satz angeordnet sind. Die Wellen-Koppelstrukturen sind in diesem Fall vorzugsweise zumindest teilweise, besonders bevorzugt vollständig vom ersten Drehlager und vom zweiten Drehlager umgeben. Bei dem ersten Drehlager und/oder dem zweiten Drehlager handelt es sich beispielsweise um ein Wälzlager, insbesondere ein Kugellager.

Vorteilhaft an dieser Ausführungsform ist, dass die Koppelstrukturen jedes einzelnen Elektromotor-Moduls an beiden Seiten von zumindest einem Wälzlager gelagert sind. Zum Zusammenfügen von zwei Elektromotor-Modulen müssen lediglich die beiden Koppelstrukturen der jeweiligen Elektromotor-Module formschlüssig miteinander verbunden werden.

Günstig ist es, wenn in dieser Anordnung die jeweils zu äußerst liegenden Drehlager der Elektromotor-Module aneinander angrenzen. Auf diese Weise wird ein besonders kompakter Elektromotor erhalten. Aufgrund der Modularisierbarkeit des Elektromotors eignet er sich gut für die Verwendung in Fahrzeugen, insbesondere in Personenkraftwagen. Allerdings ist dieser Elektromotor auch in anderen Fahrzeugen und auch in anderen Bereichen anwendbar.

Vorzugsweise besitzt die erste Wellen-Koppelstruktur einen sich in axialer Richtung erstreckenden Vorsprung. Die zweite Wellen-Koppelstruktur hat vorzugsweise einen sich ebenfalls in axialer Richtung erstreckenden Rücksprung, sodass die erste Wellen-Koppelstruktur und die zweite Koppelstruktur in axialer Richtung aneinander entlang einer Kontaktfläche anliegen. Günstig ist es, wenn die Kontaktflächen mit einer Winkelmessebene, die eine Drehachse des Rotors enthält, einen Winkel von höchstens 5° bildet. Auf diese Weise werden axiale Kräfte vermindert, die beim Anlegen eines Drehmoments an die Verbindung der Elektromotor-Module anderweitig entstehen würden.

Es ist möglich, dass der Vorsprung und der Rücksprung asymmetrisch ausgebildet sind. In diesem Fall erstreckt sich eine erste Kontaktfläche, entlang der der Vorsprung und der Rücksprung aneinander anliegen, in einem anderen Winkel relativ zu der Winkelmessebene als die zweite Kontaktfläche. Insbesondere ist es möglich, dass einer der Winkel Null ist. In diesem Fall entsteht keinerlei axiale Kraft, wenn sich die Rotoren in eine erste Richtung drehen. Hingegen entsteht eine größere Kraft, wenn die Rotoren in die entgegengesetzte Richtung drehen.

Vorzugsweise weist der Elektromotor zumindest eine Zusatzkomponente auf, die eine Zusatzkomponenten-Koppelstruktur mit einem sich in axialer Richtung erstreckenden Vorsprung hat, wobei die Zusatzkomponente mit einer der Koppelstrukturen eines Elektromotor-Moduls formschlüssig verbunden ist. Dadurch dass die Zusatzkomponente die gleiche Koppelstruktur hat wie die Elektromotor-Module, kann sie je nach Anforderung beliebig zwischen zwei Elektromotor-Modulen platziert werden. Bei der Zusatzkomponente handelt es sich beispielsweise um einen Drehgeber.

In diesem Fall weist der Elektromotor entsprechend einen Drehgeber auf, der eine Drehgeber-Koppelstruktur mit einem sich in axialer Richtung erstreckenden Vorsprung hat, wobei der Drehgeber mit einer der Koppelstrukturen eines Elektromotor-Moduls formschlüssig verbunden ist. Dadurch dass der Drehgeber die gleiche Koppelstruktur hat wie die Elektromotor-Module, kann er je nach Anforderung beliebig zwischen zwei Elektromotor-Modulen platziert werden.

Es sei darauf hingewiesen, dass die Rotorwellen vorzugsweise aller Elektromotor-Module miteinander formschlüssig koppelbare Koppelstrukturen aufweisen.

Alternativ oder zusätzlich handelt es sich bei der Zusatzkomponente um eine Bremse. Gemäß dieser Ausführungsform besitzt der Elektromotor eine Bremse, die eine Bremsen-Koppelstruktur mit einem in axialer Richtung sich erstreckenden Vorsprung hat, wobei die Bremse mit einer Koppelstruktur eines Elektromotor-Moduls oder des Drehgebers formschlüssig verbunden ist.

Wiederum alternativ oder zusätzlich handelt es sich bei der Zusatzkomponente um eine Kupplung.

Ein zweiter Aspekt der Erfindung betrifft einen Elektromotor, der einen Stator, der Stator-Elektromagnete aufweist, und einen Rotor, der Permanentmagnete aufweist, umfasst, wobei die Rotorwelle einen Kühlkanal hat. Ein Elektrofahrzeug mit einem entsprechenden Elektromotor ist ebenfalls erfindungsgemäß. Günstig ist es, wenn dieser Elektromotor aus einem ersten Elektromotor-Modul und einem zweiten Elektromotor-Modul aufgebaut ist, wobei die Elektromotor-Module die oben angegebenen Eigenschaften haben. Die erste Rotorwelle und die zweite Rotorwelle sind mittels der Wellen-Koppelstrukturen formschlüssig miteinander gekoppelt, wobei der Kühlkanal vorzugsweise durch den ersten Rotor und den zweiten Rotor verläuft. Günstig ist es zudem, wenn die Koppelstrukturen zumindest teilweise von der Drehlagerung umgeben sind. Auf diese Weise wird ein mit gekühlten Rotoren modular aufgebauter Elektromotor erhalten.

Günstig ist es, wenn die Rotorwelle einen in axialer Richtung verlaufenden Zentral-Kühlkanal, einen Zuführ-Stichkanal, der radial auswärts verläuft und mit dem Zentral-Kühlkanal verbunden ist, und zudem einen Abführ-Stichkanal aufweist, der auswärts verläuft und der mit dem Zentral-Kühlkanal verbunden ist. Es ist auf diese Weise möglich, Kühlfluid durch den Zuführ-Stichkanal dem Stator zuzuführen. Der Stator besitzt vorzugsweise eine Kühlfluid-Zuführung zum Zuführen von Kühlfluid, insbesondere von Kühlflüssigkeit, zum Zuführ-Stichkanal, und eine Kühlfluid-Abführung zum Ableiten von Kühlfluid aus dem Abführ-Stichkanal.

Besonders bevorzugt hat die Kühlfluid-Zuführung eine erste Wellendichtung und eine zweite Wellendichtung, die einen Ringkanal bilden. Die Kühlfluid-Zuführung besitzt vorzugsweise zudem eine Zuleitung, die ausgebildet ist zum Zuführen von Kühlfluid zum Ringkanal. Der Ringkanal ist so angeordnet, dass das Kühlfluid in den Zuführ-Stichkanal fließt. In anderen Worten ist der Zuführ-Stichkanal auf einer axialen Länge entlang einer Längsachse des Rotors zwischen der ersten Wellendichtung und der zweiten Wellendichtung angeordnet.

Günstig ist es, wenn die beiden Elektromotor-Module baugleich sind. Sofern mehr als zwei Elektromotor-Module vorhanden sind, sind vorzugsweise eine Mehrheit der Elektromotor-Module, besonders günstig, alle Elektromotor-Module baugleich.

Vorzugsweise besitzt zumindest der Motor eines der Elektromotor-Module einen Magnetträger und eine Mehrzahl an Permanentmagneten, die am Magnetträger befestigt sind. Günstig ist es, wenn der Rotor einen Nebenkanal, der zumindest auch in axialer Richtung durch den Magnetträger verläuft und mit dem Zentral-Kühlkanal verbunden ist, aufweist. Auf diese Weise kann der Magnetträger effektiv gekühlt werden.

Permanentmagneten verlieren ihre Magnetisierung oberhalb der Curie-Temperatur. Da Elektromotoren, insbesondere solche, die in Elektrofahrzeugen verbaut sind, auch in vergleichsweise warmen Umgebungen funktionieren müssen und zudem eine Erwärmung der Permanentmagnete und des Magnetträgers insbesondere durch Wirbelstrom-Verluste nicht vermeidbar ist, muss sichergestellt sein, dass sich die Permanentmagneten nicht zu stark erwärmen. Bislang erfolgt dies durch Erfassen der Temperatur und durch ein Abschalten des entsprechenden Motors, wenn eine vorgegebene Schwellentemperatur, die unterhalb der Kühltemperatur der Permanentmagneten liegt, überschritten wurde. Durch das Kühlen des Magnetträgers ist dieses Vorgehen zwar weiterhin möglich und bevorzugt, aber nicht mehr notwendig.

Besonders günstig ist es, wenn die Permanentmagneten radial außerhalb der Stator-Elektromagneten angeordnet sind. Der Elektromotor kann dann als Außenläufer bezeichnet werden. Besonders günstig ist es dann, wenn die Rotorwelle einen ersten Hülsenabschnitt, der sich in eine erste axiale Richtung erstreckt, und einen zweiten Hülsenabschnitt, der sich in eine der ersten axialen Richtung entgegengesetzte Richtung erstreckt, aufweist, wobei die Hülsenabschnitte vorzugsweise symmetrisch zueinander sind und vorzugsweise Kühlkanäle enthalten. Diese Kühlkanäle sind vorzugsweise mit dem Kühlkanal, insbesondere dem Zentral-Kühlkanal verbunden. Durch das aktive Kühlen der Hülsenabschnitte kann der Elektromotor mit einer hohen Dauerleistung betrieben werden.

Die Hülsenabschnitte sind vorzugsweise an einem rohrförmigen Bauteil ausgebildet, das an einem Steg befestigt ist. Der Steg besitzt vorzugsweise einen radial auswärts verlaufenden Verbindungskanal, der den Zentral-Kühlkanal mit einem Außenkanal im rohrförmigen Bauteil verbindet. Die genannte Bauart führt dazu, dass die Hülsenabschnitte mit den Kanälen vergleichsweise einfach zu fertigen sind.

Es sei darauf hingewiesen, dass hier wie in der gesamten Beschreibung unter dem Merkmal, dass ein bestimmtes Objekt vorhanden ist, insbesondere verstanden wird, dass zumindest eines dieser Objekte vorhanden ist. Im vorliegenden Zusammenhang bedeutet dies, dass der Steg zumindest einen radial auswärts verlaufenden Verbindungskanal hat.

Günstig ist es, wenn der Stator einen Kühlstutzen aufweist, der angeordnet ist zum Kühlen der Elektromagneten. In den Elektromagneten fällt der größte Teil der Verlustwärme an. Gleichzeitig sind Elektromagneten in der Regel weniger temperaturanfällig als Permanentmagneten. Es ist daher möglich, dass das Kühlfluid in einem Kühlkreislauf geführt ist und in Strömungsrichtung hinter einem Kühler zunächst die Permanentmagneten, insbesondere die Magnetträger, kühlt und danach die Stator-Elektromagneten. Alternativ ist es auch möglich, dass zwei Kühlkreisläufe existieren, wobei ein Kühlkreislauf die Permanentmagneten kühlt und ein zweiter Kühlkreislauf die Elektromagneten.

Günstig ist es, wenn der Elektromotor wie oben beschrieben aus zumindest zwei Elektromotor-Modulen aufgebaut ist, wobei die Motoren der jeweiligen Elektromotor-Module jeweils einen Kühlkanal haben und wobei die beiden Kühlkanäle miteinander verbunden sind, sodass Kühlfluid aus dem ersten Kühlkanal in den zweiten Kühlkanal strömen kann.

Vorzugsweise besitzt das erste Elektromotor-Modul ein erstes Modul-Gehäuse, das eine erste Gehäuse-Koppelstruktur aufweist, wobei das zweite Elektromotor-Modul ein zweites Modul-Gehäuse hat, das eine zweite Gehäuse-Koppelstruktur aufweist und wobei die Elektromotor-Module mittels ihrer Gehäuse-Koppelstruktur formschlüssig miteinander verbunden sind. Dies stellt eine besonders einfache Form der Kopplung der Elektromotor-Module dar.

Besonders günstig ist es, wenn die Gehäuse-Koppelstrukturen jeweils zumindest teilweise durch einen konischen Gehäusering gebildet sind. Günstig ist es, wenn das Elektromotor-Modul einen Verbinder zum formschlüssigen Verbinden der Gehäuse-Koppelstrukturen miteinander aufweist. Der Verbinder ist vorzugsweise von außen montierbar ausgebildet. In anderen Worten sind die Elektromotor-Module allein durch Lösen des Verbinders voneinander trennbar. Der Verbinder ist von außen montierbar.

Vorzugsweise ist der Verbinder eine Schelle, sodass die Gehäuse-Koppelstrukturen mittels der Schelle miteinander verbunden sind. Die Schelle hat vorzugsweise eine zumindest abschnittsweise konische Innenfläche, wobei die konische Innenfläche in der Regel so ausgebildet ist, dass sich keine Linienberührung, sondern eine flächige Berührung zwischen den Gehäuseringen einerseits und der Schelle andererseits ergibt.

Vorzugsweise sind die erste Rotorwelle und die zweite Rotorwelle, sowie gegebenenfalls weitere Komponenten des Elektromotors, die mittels der Wellen-Koppelstrukturen gekoppelt sind, mit axialem Spiel gekoppelt. Axiale Längenänderungen an den Rotoren durch Fertigungstoleranzen oder durch thermisch bedingte Längenänderungen während des Betriebs werden durch ein definiertes axiales Spiel in der Wellenkoppelstruktur ausgeglichen.

Im Folgenden wird die Erfindung anhand der beigefügten Zeichnungen näher erläutert. Alle Zeichnungen zeigen die Erfindung an einer von verschiedenen Elektromotor-Bauarten, nämlich als permanenterregte Synchronmotoren, die eine bevorzugte Ausführungsform der Erfindung darstellen. Es könnten jedoch auch andere Elektromotor-Bauarten verwendet werden, beispielsweise Asynchronmotoren oder bürstenlose Gleichstrommotoren. In den Zeichnungen zeigt
- Figur 1a: ein erfindungsgemäßes Elektrofahrzeug mit einem erfindungsgemäßen Elektromotor,
- Figur 1b ein: erfindungsgemäßes Elektrofahrzeug in einer Ansicht von hinten,
- Figur 1c: ein Elektrofahrzeug gemäß einer zweiten Ausführungsform mit zwei Schaltkupplung und zwei angetriebenen Achsen in einer perspektivischen Ansicht,
- Figur 1d: ein Elektrofahrzeug gemäß einer dritten Ausführungsform mit zwei erfindungsgemäßen Elektromotoren, deren Rotoren parallel zueinander verlaufen, mit vier Schaltkupplungen in einer perspektivischen Ansicht,
- Figur 2a: eine maßstabsgerechte perspektivische Ansicht eines Elektromotor-Moduls, das als Innenläufer ausgebildet ist und Teil eines erfindungsgemäßen Elektromotors sein kann,
- Figur 2b: den Rotor des Elektromotor-Moduls der Innenläufer-Version gemäß Figur 2a in einer perspektivischen Ansicht,
- Figur 3a: einen Querschnitt durch einen erfindungsgemäßen Elektromotor in Form eines Innenläufers aus zwei Elektromotor-Modulen gemäß der Figuren 2a und 2b,
- Figur 3b: eine Detailansicht der Elektromotor-Module gemäß Figur 3a,
- Figur 4: in der Teilfigur 4a eine perspektivische, maßstabsgerechte Ansicht eines erfindungsgemäßen Elektromotors gemäß einer vierten Ausführungsform, der drei Elektromotor-Module umfasst, und in Teilfigur 4b eine teilweise Explosionsansicht des Elektromotors gemäß Teilfigur 4a,
- Figur 5: einen Querschnitt durch ein Elektromotor-Modul, das einen Elektromotor in Form eines Innenläufers darstellt,
- Figur 6: einen Querschnitt durch ein Elektromotor-Modul eines erfindungsgemäßen Elektromotors oder einen erfindungsgemäßen Elektromotor, das einen Außenläufer-Elektromotor darstellt,
- Figur 7: in der Teilfigur 7a den Rotor des Elektromotor-Moduls gemäß Figur 6 in einer isometrischen perspektivischen Ansicht und in Teilfigur 7b eine Rotorwelle und einen Steg des Rotors gemäß Teilfigur 7a,
- Figur 8: einen Querschnitt durch einen erfindungsgemäßen Elektromotor mit zwei Elektromotor-Modulen, die als Außenläufer-Elektromotoren ausgebildet sind,
- Figur 9: in der Teilfigur 9a einen Kühlstützen für einen erfindungsgemäßen Elektromotor in einer isometrischen perspektivischen Glaskörperansicht und Figur 9b einen Querschnitt durch die Statorkappe 50 des Kühlstutzens gemäß Teilfigur 9a und
- Figur 10: eine weitere Ausführungsform eines Elektromotor-Moduls 38.

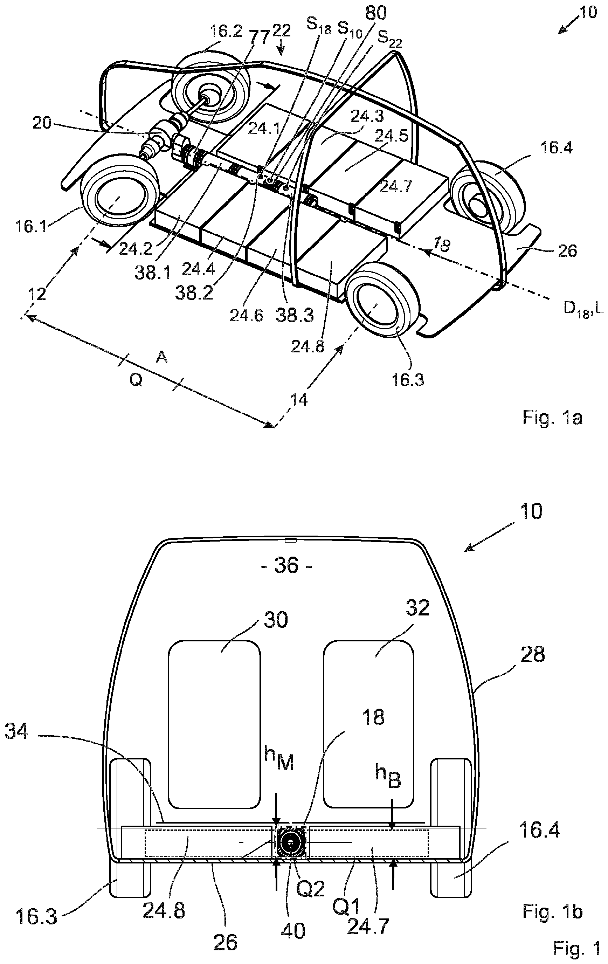

*Figur 1a* *zeigt ein erfindungsgemäßes Elektrofahrzeug 10 in Form eines Elektroautos, das eine erste Achse 12 in Form einer Vorderachse und eine zweite Achse 14 in Form einer Hinterachse aufweist. An der ersten Achse 12 sind Räder 16.1, 16.2 befestigt, an der zweiten Achse 14 sind Räder 16.3, 16.4 befestigt. Ein Elektromotor 18 treibt über ein Differentialgetriebe 20, das auch Differential genannt werden kann, die Räder 16.1, 16.2 der ersten Achse 12 an.*

*Der Elektromotor 18 wird von einer Batterie 22 mit Strom versorgt. Die Batterie 22 umfasst zumindest zwei, im vorliegenden Fall acht, Batterie-Einheiten 24.1, 24.2,* ...*, 24.8. Unter einer Batterie wird hier jede Art von Baugruppe aus galvanischen Elementen verstanden, welche der Speicherung elektrischer Energie oder der Umwandlung in elektrische Energie zur Versorgung des Elektromotors 18 dient.*

*Es ist zu erkennen, dass eine Motor-Drehachse D₁₈ zwischen den Batterie-Einheiten 24.1, 24.3, 24.5, 24.7 einerseits und 24.2, 24.4, 24.6 und 24.8 andererseits verläuft. Eine Masse mᵣ der rechtsseitig der Motor-Drehachse D₁₈ angeordneten Batterie-Einheiten 24.1, 24.3, 24.5 und 24.7 entspricht einer Masse mₗ der Batterie-Elemente links der Motor-Drehachse D₁₈, also im vorliegenden Fall der Batterie-Elemente 24.2, 24.4, 24.6 und 24.8.*

*Unter dem Merkmal, dass die beiden Massen mᵣ, mₗ einander entsprechen, wird insbesondere verstanden, dass die beiden Massen um höchstens 20%, vorzugsweise höchstens 15%, voneinander abweichen.*

*Das Elektrofahrzeug 10 besitzt einen Fahrzeugboden 26. In der vorliegenden Ausführungsform sind sowohl die Batterie 22 als auch der Elektromotor 18 auf dem Fahrzeugboden 26 montiert. Das Elektrofahrzeug 10 umfasst zudem nicht eingezeichnete Komponenten, wie beispielsweise eine Außenhülle, insbesondere aus Blech, sowie Sitze und eine Lenkung.*

*Figur 1b* *zeigt das Elektrofahrzeug 10 in einer Ansicht von hinten. Es ist zu erkennen, dass eine Elektromotor-Bauhöhe h_{M} einer Batterie-Bauhöhe h_{B} entspricht. Die Elektromotor-Bauhöhe h_{M} ist die Höhe desjenigen gedachten Quaders Q₁ minimalen Volumens, der 90% der Masse der Batterie 22 umschließt.* *Figur 1b* *zeigt zudem eine Karosserie 28 des Elektrofahrzeugs 10. Eingezeichnet ist zudem ein Fahrersitz 30 und ein Beifahrersitz 32, die beide auf einem ebenen Boden 34 eines Fahrgastraums 36 angeordnet sind.*

*In der in* *Figur 1a* *gezeigten Ausführungsform ist der Elektromotor 18 aus drei hintereinander gekoppelten Elektromotor-Modulen 38.1, 38.2, 38.3 aufgebaut. Alle drei Elektromotor-Module 38.1, 38.2, 38.3 sind baugleich und weisen miteinander gekoppelte Rotorwellen 40.1, 40.2, 40.3 auf. Die Elektromotor-Module 38.i (i* = *1,* ... *N; N: Anzahl der Elektromotor-Module) sind baugleich.*

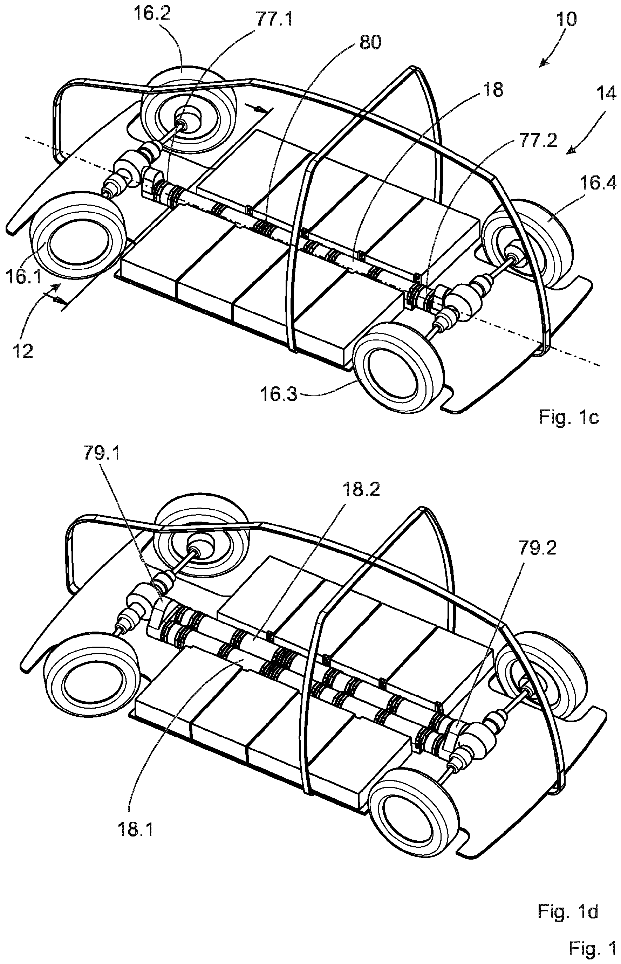

Figur 1c zeigt eine maßstabsgerechte perspektivische Ansicht eines erfindungsgemäßen Elektrofahrzeugs 10 ohne seine Karosserie, das eine erste Schaltkupplung 77.1 und eine zweite Schaltkupplung 77.2 aufweist. Die erste Schaltkupplung liegt in einem Drehmomentpfad zwischen dem Elektromotor 18 und den Rädern 16.1, 16.2 der ersten Achse 12. Die zweite Schaltkupplung 72 liegt in einem Drehmomentpfad zwischen dem Elektromotor 18 und den Rädern 16.3 und 16.4 der zweiten Achse 14. Die Schaltkupplungen 77.1, 77.2 sind vorzugsweise elektrisch schaltbar. Es ist auf diese Weise möglich, dass das Elektrofahrzeug 10 entweder einen reinen Vorderradantrieb oder einen reinen Hinterradantrieb oder Allradantrieb hat.

Figur 1d zeigt eine reduzierte perspektivische maßstabsgerechte Ansicht eines erfindungsgemäßen Elektrofahrzeugs gemäß einer weiteren Ausführungsform, das zwei Elektromotoren 18.1, 18.2 aufweist. Beide Elektromotoren 18.1, 18.2 bestehen aus zumindest zwei Modulen, deren jeweilige Drehachsen parallel zueinander verlaufen. Es handelt sich aber um eine Parallelität im technischen Sinne, das heißt, dass es zwar möglich, nicht aber notwendig ist, dass die beiden Achsen im mathematischen Sinne parallel zueinander verlaufen. Insbesondere können die Drehachsen einen Winkel miteinander einschließen, der beispielsweise kleiner als 3 ° ist.

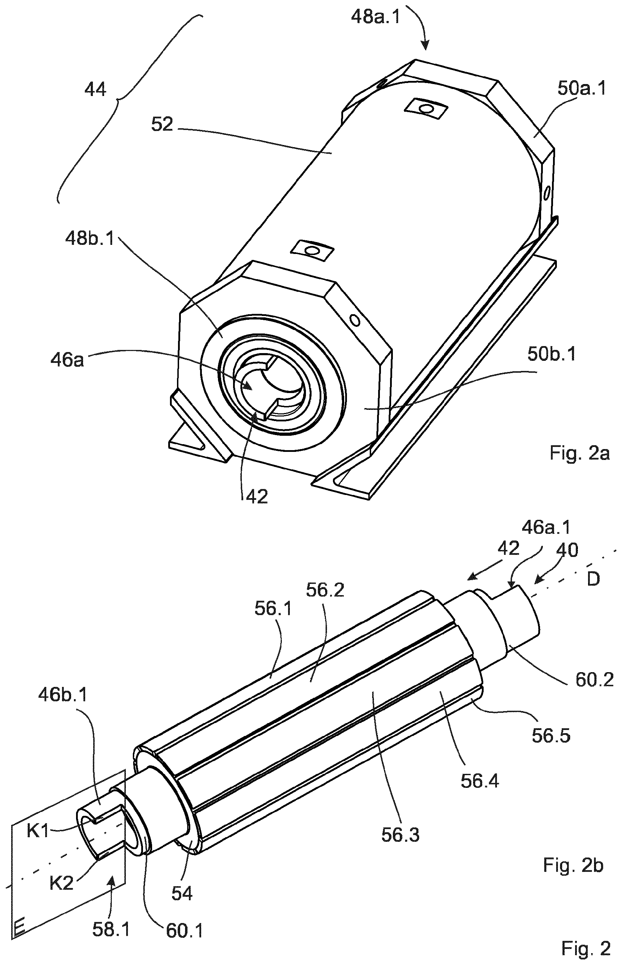

Figur 2a zeigt ein Elektromotor-Modul 38 der Innenläufer-Version, das einen ersten Rotor 42 (vgl. Figur 2b) und ein Modul-Gehäuse 44 aufweist. An der Rotorwelle 40 des Rotors 42 ist eine erste Koppelstruktur 46a ausgebildet. Das Modul-Gehäuse 44 umfasst einen Gehäusering 48, der auch als Kopplungsring bezeichnet werden kann. Im vorliegenden Fall ist der Gehäusering 48 an einer Statorkappe 50a ausgebildet. Das Modul-Gehäuse 44 umfasst zudem eine zweite Statorkappe 50b und einen Statorträger 52, der mit beiden Statorkappen 50a, 50b verbunden und in der gezeigten Ausführungsform der Innenläufer-Version zwischen beiden angeordnet ist.

Es ist zu erkennen, dass die Wellen-Koppelstruktur 46 teilweise axial über das Modul-Gehäuse 44 übersteht und teilweise hinter das Modul-Gehäuse 44 zurückspringt.

Figur 2b zeigt den Rotor 42 mit der Wellen-Koppelstruktur 46a.1 und einer zweiten Wellen-Koppelstruktur 46b.1, die der ersten Koppelstruktur 46a gegenüberliegend angeordnet ist. Der Rotor 42 besitzt einen Magnetträger 54, mittels dem Permanentmagneten 56.1, 56.2 angeordnet sind. Die Permanentmagneten 56.j (j = 1, 2, ...) sind so angeordnet, dass Nordpol und Südpol jeweils alternierend nach außen weisen.

Figur 2b zeigt zudem, dass die erste Koppelstruktur 46a einen sich in axialer Richtung erstreckenden Vorsprung 58.1 hat. Im montierten Zustand liegt dieser Vorsprung 58.1 entlang zweier Kontaktflächen K1, K2 an einer komplementären Koppelstruktur des benachbarten Elektromotor-Moduls an. Die Kontaktflächen K1, K2 bilden mit einer Winkelmessebene E im vorliegenden Fall einen Winkel zwischen 0° und 1°. Die Winkelmessebene E ist eine Ebene, die eine Drehachse D des Rotors 42 enthält und die die jeweilige Kontaktfläche K an zumindest einer Stelle berührt oder schneidet.

Der Rotor 42 besitzt zudem eine erste Lagersitzfläche 60.1 und eine zweite Lagersitzfläche 60.2.

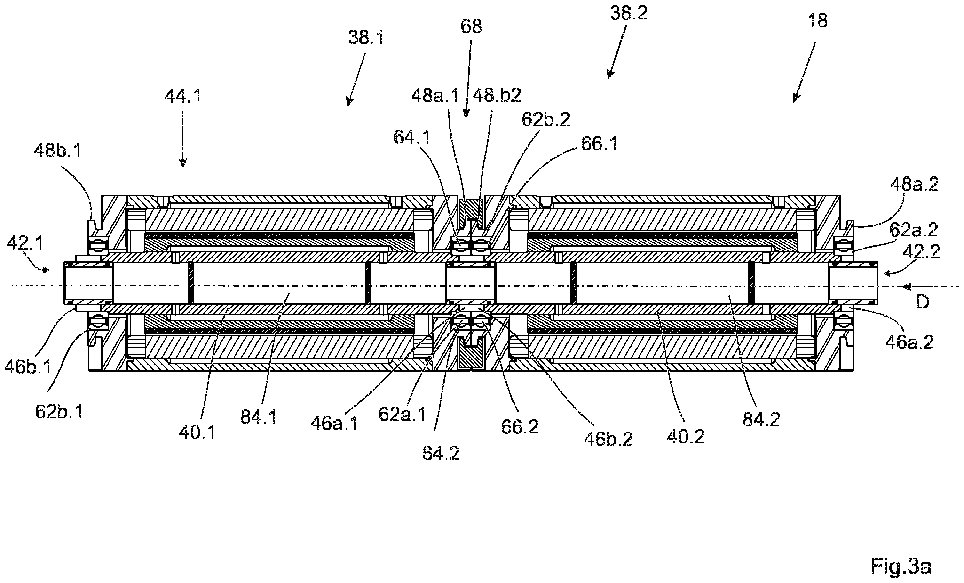

Figur 3a zeigt einen Querschnitt durch eine Ausführungsform eines erfindungsgemäßen Elektromotors 18, der aus Elektromotor-Modulen 38.1, 38.2 aufgebaut ist, die jeweils baugleich sind.

Das erste Elektromotor-Modul 38.1 besitzt ein erstes Drehlager 62a.1 in Form eines Kugellagers und ein zweites Drehlager 62b.1. Das zweite Elektromotor-Modul 38.2 besitzt ein Drehlager 62a.2 und ein zweites Drehlager 62b.2. Das erste Drehlager 62a.1 besitzt einen ersten Satz an Wälzkörpern 64.1, 64.2, ..., die ringförmig angeordnet sind. Das zweite Drehlager 62b.2 besitzt ebenfalls Wälzkörper 66.1, 66.2, ..., die entlang eines zweiten Rings angeordnet sind, der versetzt zum ersten Ring liegt. Die beiden Drehlager 62a.1 und 62b.2 bilden ein Drehlager 68. Es ist zu erkennen, dass die Koppelstruktur 46a des ersten Elektromotor-Moduls 38.1 mit einer Koppelstruktur 46b.2 des zweiten Elektromotor-Moduls 38.2 einen Formschluss bildet und dass die Koppelstruktur 46a.1, 46b.2 von der Drehlagerung 68 umgeben sind.

Figur 3a zeigt, dass sich die Koppelstruktur 46a.1 des ersten Elektromotor-Moduls 38.1 bis unter das Drehlager 62b.2 des zweiten Elektromotor-Moduls 38.2 erstreckt. Dies stellt - unabhängig von anderen Merkmalen der hier beschriebenen Ausführungsform - eine allgemein bevorzugte Ausführungsform dar. Zudem erstreckt sich die Koppelstruktur 46b.2 bis unter das Drehlager 62a.1.

Wenn in der vorliegenden Beschreibung von einer axialen Länge gesprochen wird, so bezieht sich dies auf eine Position entlang einer schematisch eingezeichneten x - Achse, die sich in Richtung der Drehachse D erstreckt. Insbesondere sind damit die Koppelstrukturen 46a.1 und 46b.2 auf gleicher axialer Höhe angeordnet wie die Drehlagerung 38.

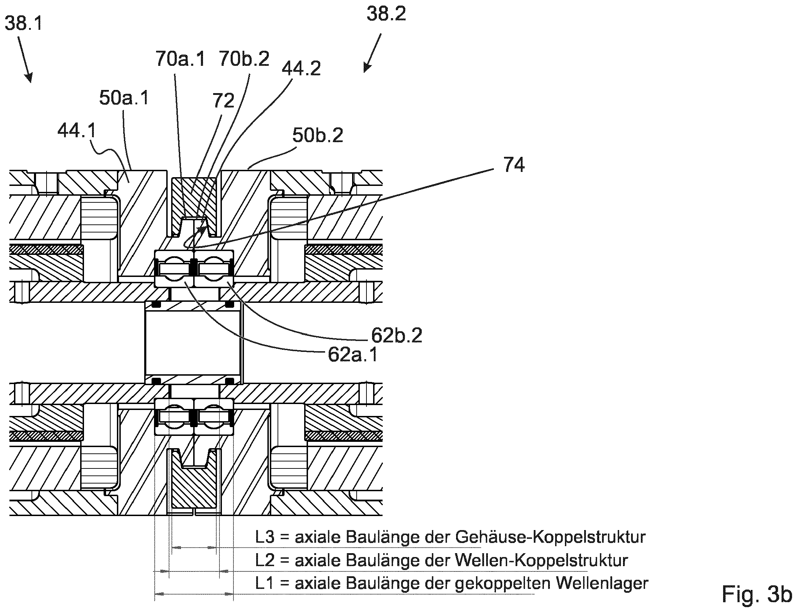

Figur 3b zeigt einen Ausschnitt aus Figur 3a. Es ist zu erkennen, dass das Modul-Gehäuse 44.1 eine erste Gehäuse-Koppelstruktur 70a.1, die einen ersten konischen Gehäusering bildet, besitzt. Das zweite Modul-Gehäuse 44.2 besitzt eine zweite Gehäuse-Koppelstruktur 70b.2, die ebenfalls einen zweiten konischen Gehäusering bildet. Die beiden Gehäuse-Koppelstrukturen 70a.1, 70b.2 sind mittels eines Verbinders in Form einer Koppel-Schelle 72 formschlüssig verbunden. Die Koppel-Schelle 72 besitzt eine konische Innenfläche 74, die mit den Gehäuse-Koppelstrukturen 70a.1, 70b.2 jeweilige Flächenberührungen hat und so einen Formschluss bewirkt.

Figur 3b zeigt zudem, dass eine axiale Baulänge L1 weniger als das Doppelte, hier weniger als das 1,5-fache einer axialen Baulänge L2 eines Kopplungsabschnitts beträgt. Die axiale Baulänge L2 entspricht der axialen Länge der Wellen-Koppelung. Eine axiale Baulänge L3 der Koppel-Schelle 72 ist um einen kleinen Betrag kleiner als die axiale Baulänge L2.

Die Koppel-Schelle 72 ist so gestaltet, dass sie von außen gelöst und angezogen werden kann. Es ist dadurch möglich, zwei Elektromotor-Module 38.1, 38.2 dadurch zu verbinden, dass zunächst die Rotorwellen mittels ihrer jeweiligen Wellen-Koppelstrukturen miteinander verbunden werden. Danach werden die Gehäuse mittels des Verbinders, hier also der Koppel-Schelle 72, miteinander verbunden. Zum Lösen der Verbindung zwischen den beiden Elektromotor-Modulen 38.1, 38.2 muss lediglich die Koppel-Schelle 72 entfern werden, dann können die Rotorwellen axial auseinander gezogen werden.

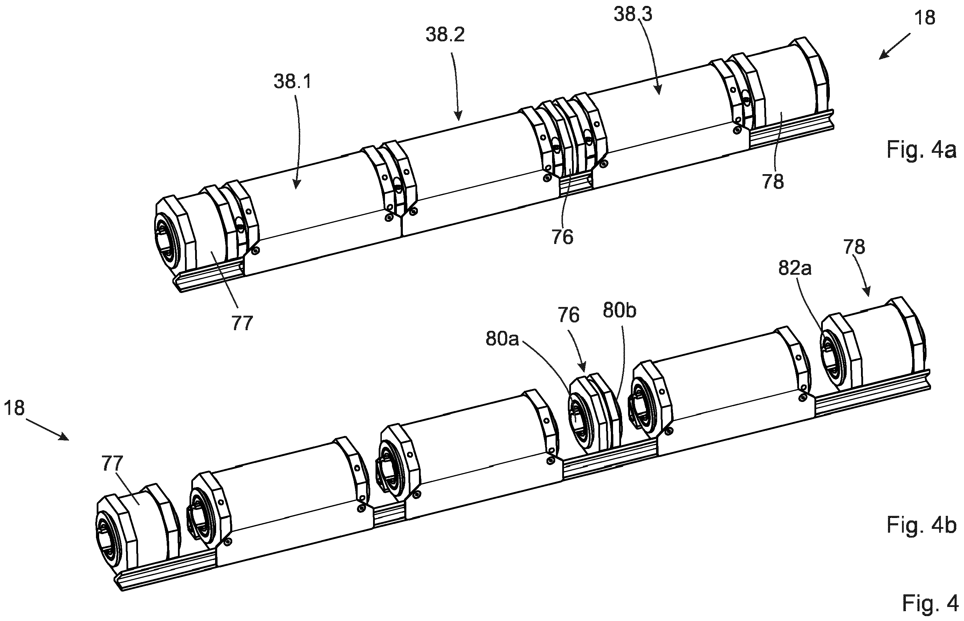

Figur 4a zeigt einen erfindungsgemäßen Elektromotor, der drei Elektromotor-Module 38.1, 38.2 und 38.3 sowie einen Drehgeber 76, eine Kupplung 77 und eine Bremse 78 umfasst. Der Drehgeber 76 und die Bremse 78 besitzen jeweils eine Welle, die koaxial zu den Rotorwellen der Elektromotor-Module 38.i verlaufen.

Figur 4b zeigt eine Teil-Explosionsansicht des Elektromotors 18 gemäß Figur 4a. Es ist zu erkennen, dass der Drehgeber 76 Drehgeber-Koppelstrukturen 80a, 80b hat, die den Koppelstrukturen 46 der Elektromotor-Module 38 entsprechen.

Die Bremse 78 besitzt zumindest eine Bremsen-Koppelstruktur 82a, die ebenfalls wie die sonstigen Koppelstrukturen aufgebaut ist, sodass die Bremse 78 so mit dem Drehgeber 76 als auch mit jedem Elektromotor-Modul 38 formschlüssig verbindbar ist. Die Kupplung 77 besitzt die gleiche Koppelstruktur wie die Bremse 78, sodass sie wie die Bremse 78 mit jedem Elektromotor-Modul gekoppelt werden kann.

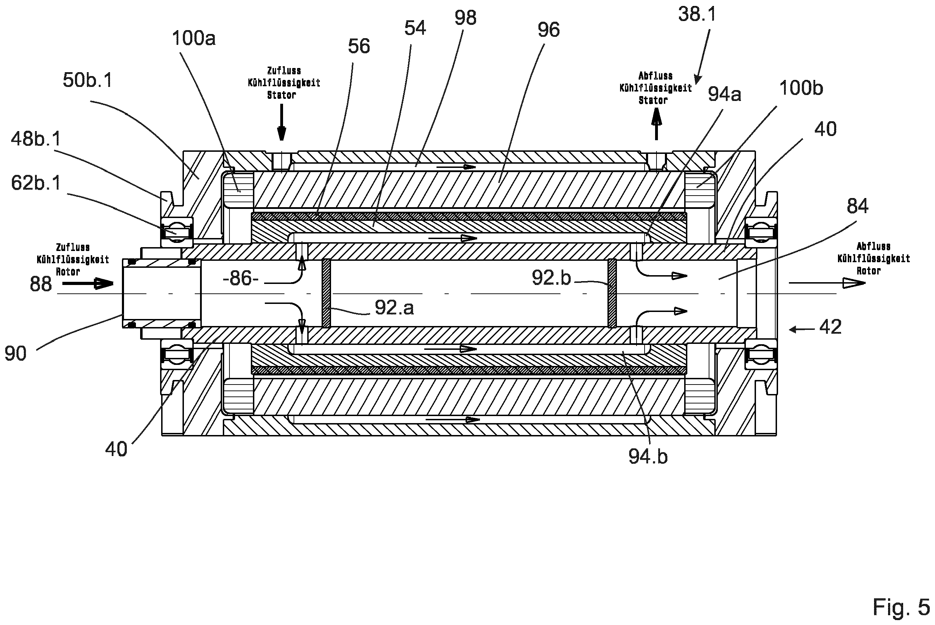

Figur 5 zeigt einen Querschnitt durch das Elektromotor-Modul 38.1, das zugleich als eigenständiger Elektromotor angesehen werden kann. Es ist zu erkennen, dass in der Rotorwelle 40 ein Kühlkanal 84 angeordnet ist. Ein Kühlfluid 86 in Form einer Kühlflüssigkeit wird in der vorliegenden Form axial durch eine Kühlfluid-Zuführung 88 zugeführt. Eine Dichtbuchse 90 rotiert mit der Rotorwelle und ist über Dichtungen mit der Rotorwelle 40 verbunden.

In der Rotorwelle 40 ist mindestens eine, bevorzugt sind zwei Trennwände 92a, 92b angeordnet, die dazu führen, dass das Kühlfluid 86 durch einen ersten Nebenkanal 94a, einen zweiten Nebenkanal 94b oder einen sonstigen, nicht eingezeichneten Nebenkanal fließt. Die Nebenkanäle 94a, 94b, ... verlaufen sowohl in axialer wie auch in radialer Richtung und damit weitgehend parallel zum Kühlkanal 84. Das Kühlfluid im Nebenkanal 94 kühlt den Magnetträger 54 und damit die Permanentmagnete 56.

Radial außerhalb der Permanentmagnete 56 ist ein Statorblechpaket 96 angeordnet. Das Statorblechpaket 96 wird mittels Kühlfluids in einem Statorkühlkanal 98 gekühlt.

Es ist möglich, dass sich der Statorkühlkanal 98 nicht über die volle Breite des Statorblechpakets erstreckt, insbesondere müssen Wicklungsköpfe 100a, 100b nicht auf einer axialen Länge liegen, auf der sich auch der Statorkühlkanal 98 erstreckt.

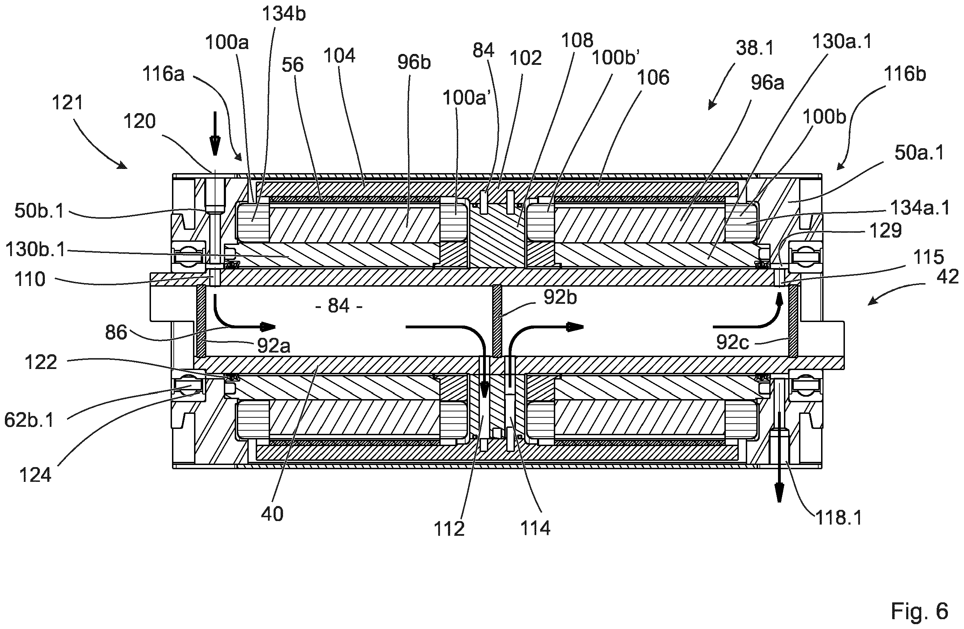

Figur 6 zeigt eine weitere Ausführungsform eines erfindungsgemäßen Elektromotor-Moduls 38, das gleichzeitig eine eigenständige Ausführungsform eines erfindungsgemäßen Elektromotors darstellt. Da es sich bei dem Elektromotor gemäß Figur 5 um einen Innenläufer handelt, handelt es sich bei dem Elektromotor 38 gemäß Figur 6 um einen Außenläufer, bei dem die Permanentmagnete 56 radial außerhalb des Statorblechpakets 96 angeordnet sind. Die Statorblechpakete 96a, 96b greifen in einen Raum zwischen der Rotorwelle 40 und einem rohrförmigen Bauteil 102, das einen ersten Hülsenabschnitt 104 und einen zweiten Hülsenabschnitt 106 aufweist. Das rohrförmige Bauteil 102 ist an einem Steg 108 befestigt, der auch als Rotornabe bezeichnet werden kann. Das rohrförmige Bauteil 102 sowie der Steg 108 bilden ein T - förmiges Rotorelement.

Die Rotorwelle 40 weist einen Zuführ-Stichkanal 110 auf, mittels dem das Kühlfluid 86 in den Kühlkanal 84 geleitet werden kann. Die Trennwände 92a, 92b, 92c führen dazu, dass das Kühlfluid aus dem Stichkanal 110 zunächst einen Teil im Kühlkanal 84 zurücklegt und dann in einen ersten Steg-Kanal 112 fließt, von wo aus es in einen nicht eingezeichneten Kanal im rohrförmigen Bauteil 102 fließen kann. Dort erwärmt sich das Kühlfluid und fließt durch einen zweiten Steg-Kanal 114 im Steg 108 zurück in den Kanal 84. Über einen Abführ-Stichkanal 115 fließt das Kühlfluid aus dem Rotor 42 in einen Wellenringkanal 129 zwischen Statorgehäuse 121 und Rotorwelle 40 und von dort in eine Kühlfluid-Abführung 118.

Das Kühlfluid 86 gelangt über eine Kühlfluid-Zuführung 120 zum Zuführ-Stichkanal 110 die Kühlfluid-Zuführung 120 ist ebenfalls in einem Statorgehäuse 121 ausgebildet, im vorliegenden Fall in der Statorkappe 50b1. Die Kühlfluid-Zuführung 120 umfasst eine erste Wellendichtung 122 und eine zweite Wellendichtung 124. In der vorliegenden Ausführungsform dient die zweite Wellendichtung 124 zudem dazu, das Drehlager 62b.1 abzudichten. Selbstverständlich ist es aber auch möglich, die zweite Wellendichtung an einer anderen Position anzuordnen.

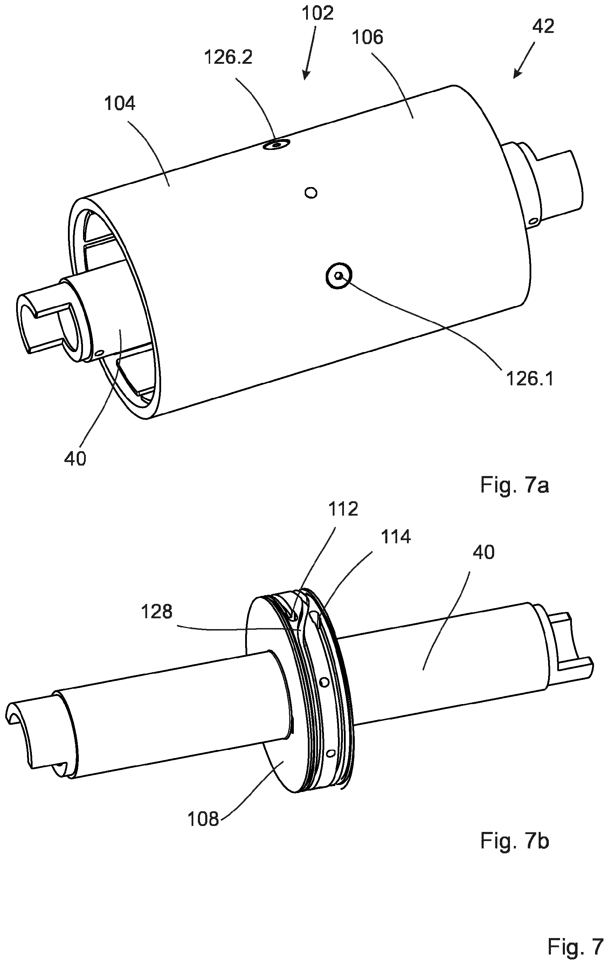

Figur 7a zeigt eine isometrische Ansicht des Rotors 42 des Moduls 38.1. Es ist zu erkennen, dass das rohrförmige Bauteil 102 mittels Schrauben 126.1, 126.2 am Steg 108 (vgl. Figur 7b) befestigt ist.

Figur 7b zeigt die Stegkanäle 112, 114, zwischen denen ein Stegringkanal 128 angeordnet ist. Kühlfluid fließt vom Stegringkanal 128 in das offene Bauteil 102 und von dort zurück, sodass es in den zweiten Steg-Kanal 114 gelangt.

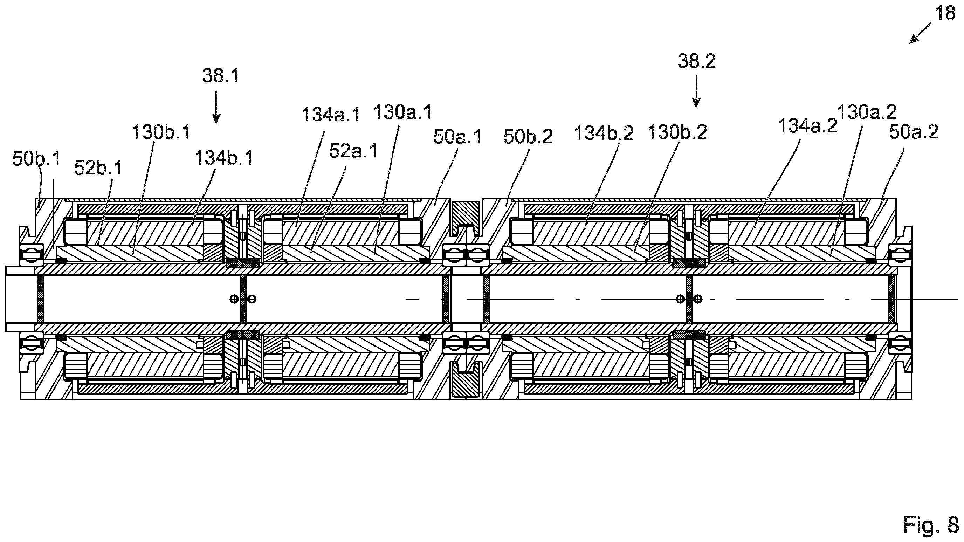

Figur 8 zeigt einen Querschnitt durch einen erfindungsgemäßen Elektromotor 18, der aus zwei Elektromotor-Modulen 38.1, 38.2 der Außenläufer-Version aufgebaut ist.

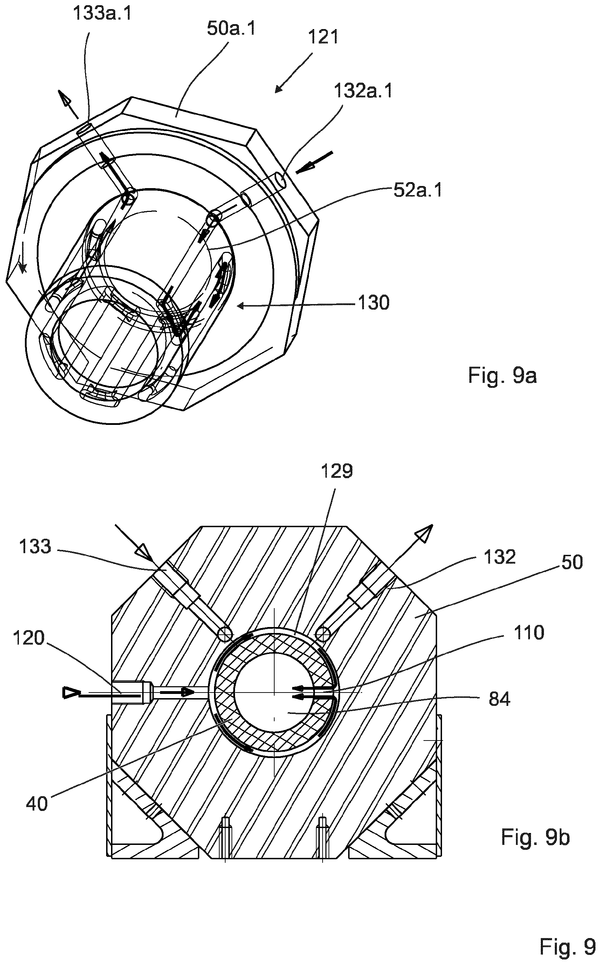

Figur 9a zeigt einen Teil des Statorgehäuses 121, bestehend aus Statorkappe 50 und Statorträger 52, der einen Zufluss 132 für Kühlfluid und einen Abfluss 133 für Kühlfluid aufweist und einen Kühlstützen 130 besitzt.. In Figur 9 sind die Kühlstutzen des Elektromotors 18 ebenfalls eingezeichnet und hier - wie auch bei den sonstigen mehrfach vorhandenen Komponenten - sowohl mit den Zählsuffixen "a" und "b" sowie ".1" und ".2" gekennzeichnet. Diese Zählung soll dazu dienen, mehrfach vorhandene Objekte möglichst einfach als gleichartig zu benennen. Mittels Kühlstützen 130 werden Stator-Elektromagnete 134 (vgl. Figuren 7 und 9) der Elektromotoren, die Außenläufer sind, gekühlt.

Figur 9b zeigt einen Querschnitt durch die Statorkappe 50 und die Rotorwelle 40 zur Darstellung des Wellenringkanals 129.

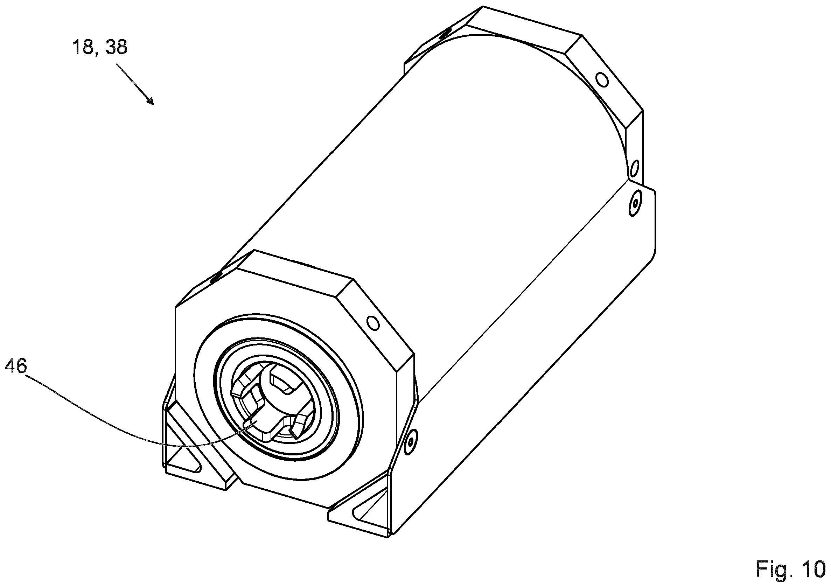

Figur 10 zeigt eine weitere Ausführungsform eines Elektromotor-Moduls 38, bei dem die Wellen-Koppelstruktur 46 mehrzähnig ausgebildet ist.

**Bezugszeichenliste**

| | | | |
|---|---|---|---|
| 10 | Elektrofahrzeug | 70 | Gehäuse-Koppelstruktur |
| 12 | erste Achse | 72 | Koppel-Schelle |
| 14 | zweite Achse | 74 | Innenfläche |
| 16 | Räder | 76 | Drehgeber |
| 18 | Elektromotor | 77 | Schaltkupplung |
| 20 | Differenzial | 78 | Bremse |
| 22 | Batterie | 79 | Koppelgetriebe |
| 24 | Batterie-Einheit | 80 | Drehgeber-Koppelstruktur |
| 26 | Fahrzeugboden | 81 | Kupplung-Koppelstruktur |
| 28 | Karosserie | 82 | Bremsen-Koppelstruktur |
| 30 | Fahrersitz | 84 | Kühlkanal |
| 32 | Beifahrersitz | 86 | Kühlfluid |
| 34 | Boden | 88 | Kühlfluid-Zuführung |
| 36 | Fahrgastraum | 90 | Dichtbuchse |
| 38 | Elektromotor-Modul | 92 | Trennwand |
| 40 | Rotorwelle | 94 | Nebenkanal |
| 42 | Rotor | 96 | Statorblechpaket |
| 44 | Modul-Gehäuse | 98 | Statorkühlkanal |
| 46 | Wellen-Koppelstruktur | 100 | Wicklungskopf |
| 48 | Gehäusering | 102 | rohrförmiges Bauteil |
| 50 | Statorkappe | 104 | erster Hülsenabschnitt |
| 52 | Statorträger | 106 | zweiter Hülsenabschnitt |
| 54 | Magnetträger | 108 | Steg |
| 56 | Permanentmagnet | 110 | Zuführ-Stichkanal |
| 58 | Vorsprung | 112 | Steg-Kanal |
| 60 | Lagersitzfläche | 114 | zweiter Steg-Kanal |
| 62 | Drehlager | 115 | Abführ-Stichkanal |
| 64 | Wälzkörper | 116 | Stator |
| 66 | Wälzkörper | 118 | Kühlfluid-Abführung |
| 68 | Drehlagerung | | |
| 120 | Kühlfluid-Zuführung | | |
| 121 | Statorgehäuse (besteht aus Statorkappe 50 und Statorträger 52) | | |
| 122 | erste Wellendichtung | | |
| 124 | zweite Wellendichtung | | |
| 126 | Schraube | | |
| 128 | Stegringkanal | | |
| 129 | Wellenringkanal | | |
| 130 | Kühlstutzen | | |
| 132 | Zufluss | | |
| 133 | Abfluss | | |
| 134 | Stator-Elektromagnet | | |
| A | Achsabstand | | |
| D | Drehachse | | |
| D₁₈ | Motor-Drehachse | | |
| E | Winkelmessebene | | |
| i, j | Laufindices | | |
| Kᵢ | Kontaktfläche | | |
| L1 | axiale Baulänge Drehlagerung | | |
| L2 | axiale Baulänge der Wellen-Koppelstruktur | | |
| L3 | axiale Baulänge der Gehäuse-Koppelstruktur | | |
| mₗ | linke Batteriemasse | | |
| mᵣ | rechte Batteriemasse | | |
| Q | zentrales Perzentil | | |
| Q1, Q2 | Quader | | |
| S₁₀ | Fahrzeug-Masseschwerpunkt | | |
| S₁₈ | Elektromotor-Masseschwerpunkt | | |
| S₂₂ | Batterie-Masseschwerpunkt | | |

## Patentansprüche

1. Elektrofahrzeug (10) mit einem Elektromotor (18), der
(a) ein erstes Elektromotor-Modul (38.1), das
- einen ersten Rotor (42.1), der eine erste Rotorwelle (40.1) besitzt, aufweist und
- dessen Rotorwelle (40.1) eine erste Wellen-Koppelstruktur (46a) hat, und
(b) zumindest ein zweites Elektromotor-Modul (38.2), das
- einen zweiten Rotor (42.2), der eine zweite Rotorwelle (40.2) besitzt, aufweist und
- dessen zweite Rotorwelle (40.2) eine zweite Wellen-Koppelstruktur (46b) hat, und
(c) eine Drehlagerung (68), mittels der die erste Rotorwelle (40.1) gelagert ist, umfasst,
(d) wobei die erste Rotorwelle (40.1) und die zweite Rotorwelle (40.2) mittels der Wellen-Koppelstrukturen (46) formschlüssig miteinander gekoppelt sind,
**dadurch gekennzeichnet, dass**
(e) die Wellen-Koppelstrukturen (46) zumindest teilweise von der Drehlagerung (68) umgeben sind.

2. Elektrofahrzeug (10) nach Anspruch 1, **dadurch gekennzeichnet, dass**
- die Drehlagerung (68) ein erstes Drehlager (62a.1), das einen ersten Satz an Wälzkörpern (64), die ringförmig angeordnet sind, aufweist und
- die Drehlagerung (68) ein zweites Drehlager (62b.2), das einen zweiten Satz an Wälzkörpern (66), die ringförmig und versetzt zum ersten Satz angeordnet sind, aufweist und dass
- die Wellen-Koppelstrukturen (46) zumindest teilweise von dem ersten Drehlager (62a.1) und dem zweiten Drehlager (62b.2) umgeben sind.

3. Elektrofahrzeug (10) nach einem der vorstehenden Ansprüche, **dadurch gekennzeichnet, dass**
(a) die erste Wellen-Koppelstruktur (46a) einen sich in axialer Richtung erstreckenden Vorsprung (58) hat,
(b) die zweite Wellen-Koppelstruktur (46b) einen sich in axialer Richtung erstreckenden Rücksprung hat, sodass die erste Wellen-Koppelstruktur (46a) und die zweite Wellen-Koppelstruktur (46b) in axialer Richtung aneinander entlang einer Kontaktfläche (Kᵢ) anliegen und dass
(c) die Kontaktfläche (Kᵢ) mit einer Winkelmessebene (E), die eine Drehachse (D) des Rotors (42) enthält, einen Winkel von höchstens 5° bildet.

4. Elektrofahrzeug (10) nach einem der vorstehenden Ansprüche, **dadurch gekennzeichnet, dass**
(a) der Elektromotor (18) einen Drehgeber (76) aufweist, der eine Drehgeber-Koppelstruktur (80) mit einem sich in axialer Richtung erstreckenden Vorsprung (58) hat, und dass
(b) der Drehgeber (76) mit einer Wellen-Koppelstruktur (46) eines Elektromotor-Moduls (38) formschlüssig verbunden ist.

5. Elektrofahrzeug (10) nach einem der vorstehenden Ansprüche, **dadurch gekennzeichnet, dass**
(a) der Elektromotor (18) eine Bremse (78) aufweist, die eine Bremsen-Koppelstruktur (82) mit einem sich in axialer Richtung erstreckenden Vorsprung (58) hat, und dass
(b) die Bremse (78) mit einer Wellen-Koppelstruktur (46) eines Elektromotor-Moduls (38) oder des Drehgebers (76) formschlüssig verbunden ist.

6. **Elektrofahrzeug (10)** mit einem Elektromotor (18), der
(a) einen Stator (116), der Stator-Elektromagneten (134) aufweist, und
(b) einen Rotor (42), der Permanentmagneten (56) aufweist, hat **dadurch gekennzeichnet, dass**
(c) die Rotorwelle (40) einen Kühlkanal (84) hat.

7. Elektrofahrzeug (10) nach Anspruch 6, **dadurch gekennzeichnet, dass** der Elektromotor (18)
(a) aus einem ersten Elektromotor-Modul (38.1), das
- einen ersten Rotor (42.1), der eine erste Rotorwelle (40.1) besitzt, und
- eine Drehlagerung (68), mittels der die erste Rotorwelle (40.1) gelagert ist, aufweist und
- dessen Rotorwelle (40.1) eine erste Wellen-Koppelstruktur (46a) hat, und
(b) aus zumindest einem zweiten Elektromotor-Modul (38.2), das einen zweiten Rotor (42.2), der eine zweite Rotorwelle (40.2) besitzt, die eine zweite Wellen-Koppelstruktur (46b) hat,
aufgebaut ist,
(c) wobei die erste Rotorwelle (40.1) und die zweite Rotorwelle (40.2) mittels der Wellen-Koppelstrukturen (46) formschlüssig miteinander gekoppelt sind,
(d) wobei die Wellen-Koppelstrukturen (46) zumindest teilweise von der Drehlagerung (68) umgeben sind und
(e) *der Kühlkanal durch den ersten Rotor (42.1) und den zweiten Rotor (42.2) verläuft.*

8. Elektrofahrzeug (10) nach Anspruch 6, **dadurch gekennzeichnet, dass**
(a) die Rotorwelle (40)
- einen in axialer Richtung verlaufenden Zentral-Kühlkanal,
- einen Zuführ-Stichkanal (110), der radial auswärts verläuft und der mit dem Zentral-Kühlkanal verbunden ist, und
- einen Abführ-Stichkanal (115), der auswärts verläuft und der mit dem Zentral-Kühlkanal verbunden ist, aufweist,
(b) der Stator (116)
- eine Kühlfluid-Zuführung (120) zum Zuführen von Kühlfluid (86), insbesondere Kühlflüssigkeit, zum Zuführ-Stichkanal (110) und
- eine Kühlfluid-Abführung (118) zum Ableiten von Kühlfluid (86) aus dem Abführ-Stichkanal (115) aufweist.

9. Elektrofahrzeug (10) nach einem der Ansprüche 6 oder 8, **dadurch gekennzeichnet, dass** die Kühlfluid-Zuführung (88)
- eine erste Wellendichtung (122) und eine zweite Wellendichtung (124) hat, die einen Wellen-Ringkanal (129) bilden und
- eine Zuleitung hat, die ausgebildet ist zum Zuführen von Kühlfluid (86) zum Ringkanal.

10. Elektrofahrzeug (10) nach einem der Ansprüche 6 bis 9, **dadurch gekennzeichnet, dass** der erste Rotor (42.1)
(a) einen Magnetträger (54),
(b) eine Mehrzahl an Permanentmagneten (56), die am Magnetträger (54) befestigt sind, und
(c) einen Nebenkanal (94), der in axialer Richtung durch den Magnetträger (54) verläuft und mit dem Zentral-Kühlkanal verbunden ist, aufweist.

11. Elektrofahrzeug (10) nach einem der vorstehenden Ansprüche 6 bis 10, **dadurch gekennzeichnet, dass**
(a) die Permanentmagneten (56) radial außerhalb der Stator-Elektromagneten (134) angeordnet sind und dass
(b) die Rotorwelle (40)
- einen ersten Hülsenabschnitt (104) hat, der sich in eine erste axiale Richtung erstreckt und
- einen zweiten Hülsenabschnitt (106) hat, der sich in eine der ersten axialen Richtung entgegengesetzte Richtung erstreckt,
- wobei die Hülsenabschnitte (104, 106) symmetrisch zueinander sind, und dass
(c) die Hülsenabschnitte (104, 106) Kühlkanäle (84) enthalten.

12. Elektrofahrzeug (10) nach einem der vorstehenden Ansprüche 6 bis 11, **dadurch gekennzeichnet, dass**
(a) die Hülsenabschnitte (104, 106) an einem rohrförmigen Bauteil (102) ausgebildet sind
(b) das rohrförmigen Bauteil (102) an einem Steg (108) befestigt ist,
(c) der Steg (108) zumindest einen radial auswärts verlaufenden Verbindungskanal hat, der den Zentral-Kühlkanal mit einem Außen-Kanal im rohrförmigen Bauteil verbindet.

13. Elektrofahrzeug (10) nach einem der vorstehenden Ansprüche 6 bis 12, **dadurch gekennzeichnet, dass** der Stator (116) einen Kühlstutzen (130) aufweist, der angeordnet ist zum Kühlen der Stator-Elektromagnete (134).

14. Elektrofahrzeug (10) nach einem der vorstehenden Ansprüche 6 bis 13, **dadurch gekennzeichnet, dass**
(a) der Elektromotor (18) aus
(i) einem ersten Elektromotor-Modul (38.1), das
- einen ersten Rotor (42.1), der eine erste Rotorwelle (40.1) aufweist, die eine erste Wellen-Koppelstruktur (46a) hat, und
(ii) zumindest einem zweiten Elektromotor-Modul (38.2), das
- einen zweiten Rotor (42.2), der eine zweite Rotorwelle (40.2) aufweist, die eine zweite Wellen-Koppelstruktur (46b) und einen zweiten Kühlkanal (84.2) hat,
aufgebaut ist,
(b) der erste Rotor (42.1) und der zweite Rotor (42.2) mittels der Wellen-Koppelstrukturen (46) formschlüssig miteinander gekoppelt sind und dass
(c) die Kühlkanäle (84.1, 48.2) miteinander verbunden sind.

15. Elektrofahrzeug (10) nach Anspruch 14, **dadurch gekennzeichnet, dass**
(a) das erste Elektromotor-Modul (38.1) ein erstes Modul-Gehäuse (44.1) hat, das eine erste Gehäuse-Koppelstruktur (70a.1) aufweist,
(b) das zweite Elektromotor-Modul (38.2) ein zweites Modul-Gehäuse (44.2) hat, das eine zweite Gehäuse-Koppelstruktur (70b.2) aufweist,
(c) die Elektromotor-Module (38) mittels ihrer Gehäuse-Koppelstrukturen (44) formschlüssig miteinander verbunden sind und dass
(d) die Gehäuse-Koppelstruktur (70) das erste Drehlager (62a.1) radial umgibt.

16. Elektrofahrzeug (10) nach Anspruch 15, **dadurch gekennzeichnet, dass**
(a) die erste Gehäuse-Koppelstruktur (70) zumindest teilweise durch einen ersten konischen Gehäusering gebildet ist,
(b) die zweite Gehäuse-Koppelstruktur (70.2) zumindest teilweise durch zweiten konischen Gehäusering gebildet ist und dass
(c) die konischen Gehäuseringe mittels einer Koppel-Schelle (72) verbunden sind, die eine zumindest abschnittsweise konische Innenfläche hat.
